# EUROPEAN PATENT SPECIFICATION

(11) **EP 3 087 835 B1**
(45) Date of publication and mention of the grant of the patent: **18.04.2018**
(21) Application number: 16167831.3
(22) Date of filing: 29.04.2016
(51) Int. Cl.: A01M 7/00

(54) **METHOD FOR THE PESTICIDE TREATMENT OF AGRICULTURAL CROPS**
VERFAHREN ZUR PESTIZIDBEHANDLUNG VON LANDWIRTSCHAFTLICHEM ERNTEGUT
PROCÉDÉ POUR LE TRAITEMENT PESTICIDE DES CULTURES AGRICOLES

(30) Priority: 29.04.2015 IT BO20150214
(43) Date of publication of application: 02.11.2016
(73) Proprietor: Martignani Ing. C. Di Martignani Stefano & C. S.r.l., 48020 Sant'Agata Sul Santerno (IT)
(72) Inventor: MARTIGNANI, Claudio, 48022 LUGO (IT)
(74) Representative: Manconi, Stefano

(56) References cited:
- EP-A1- 2 689 662
- FR-A1- 2 800 237
- FR-A1- 2 827 121
- US-A- 4 893 755
- US-A1- 2006 214 022

## Description

The invention relates to a method for the pesticide treatment of agricultural crops.

In the field of pesticide treatments for agricultural crops, it is known to use an apparatus comprising a self-propelled vehicle, which is mobile in a forward direction; a pneumatic feeding device comprising, in turn, an impeller suited to generate a flow of air under pressure and a pneumatic circuit to convey the flow of air under pressure outwards; and a hydraulic feeding device comprising, in turn, a containing tank for a liquid pesticide mixture and a hydraulic circuit to feed the liquid pesticide mixture into the flow of air under pressure generated by the impeller.

The pneumatic circuit comprises a first group of dispensing mouths, which are arranged one over the other in an aligning direction that is substantially vertical and transverse to the forward direction; a second group of dispensing mouths, which are arranged one over the other in the aligning direction; and, for each group of dispensing mouths, a respective feeding manifold to feed the flow of air under pressure to the dispensing mouths.

The liquid pesticide mixture is fed into the flow of air under pressure flowing out of each dispensing mouth through a plurality of dispensing nozzles connected to the containing tank.

When flowing out of the dispensing nozzles, the liquid pesticide mixture is sprayed by the flow of air under pressure fed along the pneumatic circuit and through the dispensing mouths, so as to feed - into the external environment - a spray pesticide mixture, which is electrostatically charged with an electric charge with a given sign.

Following the electrostatic charging of the spray pesticide mixture, the agricultural crop subjected to the pesticide treatment assumes an electric charge with a sign that is opposite to the one of the spray pesticide mixture, which, hence, settles on the agricultural crop itself because of the electrostatic attraction force generated between the electric charges with opposite signs.

The dispensing mouths of each group of dispensing mouths are oriented so as to direct the spray pesticide mixture in an outlet direction that is substantially transverse to the aforesaid forward direction and opposite to the outlet direction of the spray pesticide mixture flowing out of the dispensing mouths of the other group of dispensing mouths.

The different orientation of the dispensing mouths of the two groups of dispensing mouths allows the apparatus to simultaneously carry out the pesticide treatment of two parallel rows of the agricultural crop.

When the apparatus carries out the treatment of end rows of the agricultural crop, the feeding of the liquid pesticide mixture and of the flow of air under pressure to the dispensing mouths of a group of dispensing mouths is stopped, so as to avoid treating the adjoining soils, namely those soils commonly known as "buffer zone", which cannot be subjected to pesticide treatments. Such an apparatus is for example known from FR2827131 A1. Known apparatuses for pesticide treatments of the type described above suffer from some drawbacks, which are mainly due to the fact that, during the pesticide treatment of the end rows of the crop, the interruption of the feeding of the liquid pesticide mixture and of the flow of air under pressure to the dispensing mouths of a group of dispensing mouths is - anyway - incapable of preserving the adjoining soils from the contamination caused, for example, by the spray pesticide mixture carried by the currents of air present in the atmosphere.

The object of the invention is to provide a method for the pesticide treatment of agricultural crops, which is not affected by the drawbacks described above.

According to the present invention, there is provided a method for the pesticide treatment of agricultural crops according to the appended claims.

The present invention will now be described with reference to the accompanying drawings, which show a nonlimiting embodiment thereof, wherein:
figures 1 and 2 are schematic perspective views, with parts removed for greater clarity, of a preferred embodiment of the apparatus of the invention, which is shown in two different operating conditions; and

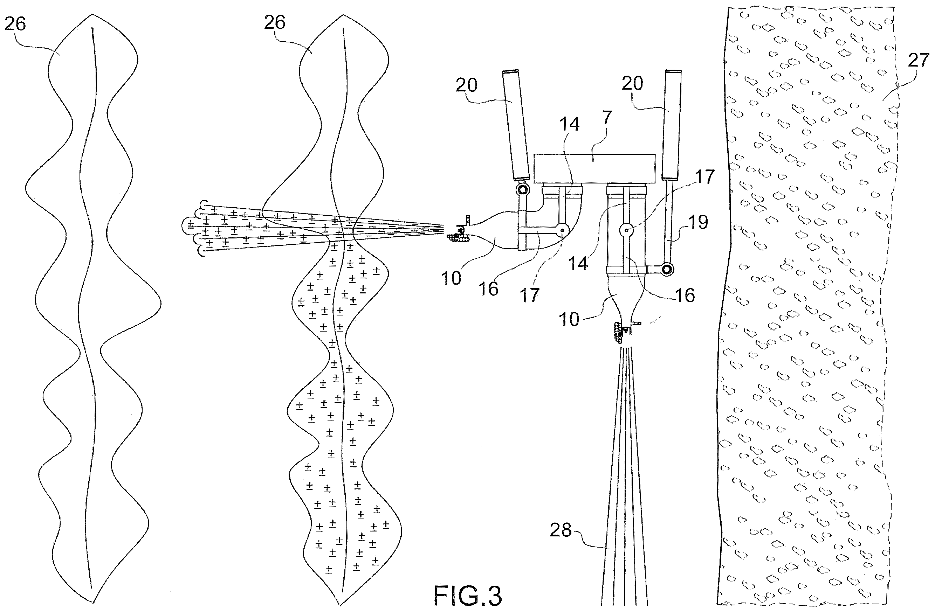

figure 3 is a schematic plan view, with parts removed for greater clarity, of a detail of the apparatus of figures 1 and 2.

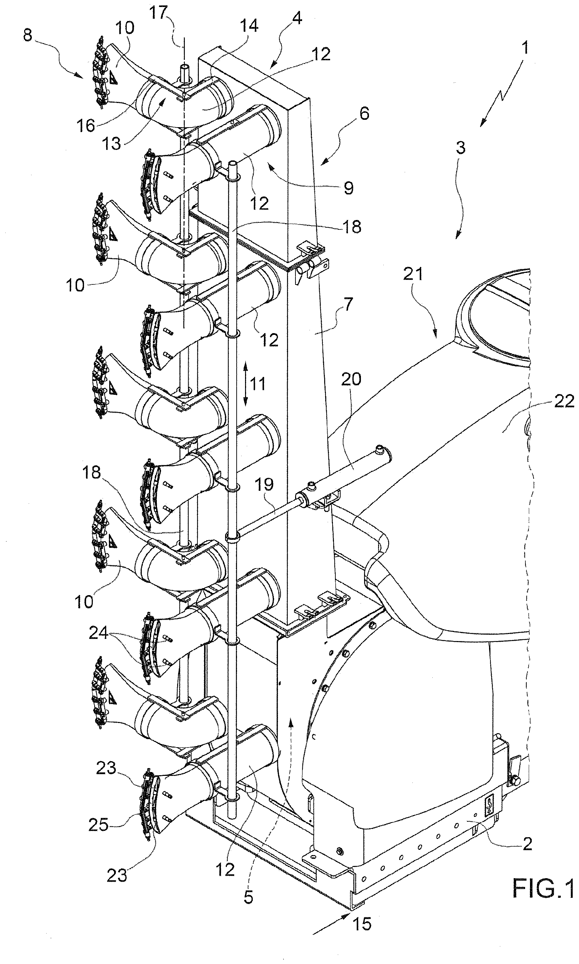

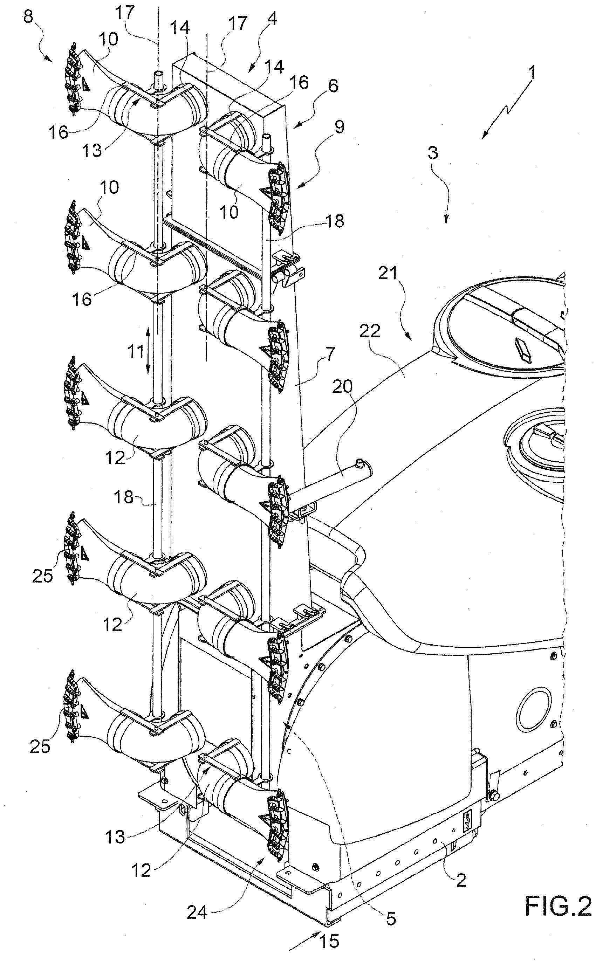

With reference to figures 1 and 2, number 1 indicates, as a whole, an apparatus for pesticide treatments comprising a self-propelled carriage 2 and a pneumatic spraying assembly 3 mounted on the carriage 2.

The assembly 3 has a pneumatic feeding device 4 comprising an impeller 5 (in this case, a centrifugal impeller) and a pneumatic circuit 6, which is designed to feed - into the external environment - the flow of air under pressure generated by the impeller 5.

The circuit 6 comprises a distribution manifold 7, which extends upwards from the carriage 2 and pneumatically communicates with two groups 8, 9 of dispensing mouths 10 beside one another.

The mouths 10 of each group 8, 9 are arranged one over the other in a substantially vertical aligning direction 11 and are each arranged beside a corresponding mouth 10 of the other group 8, 9.

Each mouth 10 comprises a flexible pneumatic duct 12, which projects from the manifold 7 in a substantially horizontal containing plane and is supported by an articulated frame 13.

The frame 13 comprises two diametrically opposite, fixed brackets 14, which are mounted one above and one under the duct 12 and project from the manifold 7 parallel to a forward direction 15 of the carriage 2; and two cranks 16, which are hinged to the brackets 14 so as to rotate around a fulcrum axis 17, which is parallel to the direction 11 and shared by the frames 13 of the mouths 10 of the same group 8, 9.

The cranks 16 of the mouths 10 of each group 8, 9 are connected to one another by a coupling rod 18, which extends in the direction 11 and is connected, in turn, to the output rod 19 of an actuator cylinder 20, which is fixed to the carriage 2 parallel to the direction 15.

The assembly 3 has, furthermore, a hydraulic feeding device 21 comprising a containing tank 22 for a pesticide product (in this case, a liquid pesticide mixture) and a plurality of known dispensing nozzles 23, which are connected to the tank 22 by means of a hydraulic circuit 24 and project into each mouth 10, so that the liquid pesticide mixture fed through the nozzles 23 is sprayed by the flow of air under pressure fed along the circuit 6.

Furthermore, on the inside of each mouth 10, there is provided a metal plate 25, which is supplied with electric power and is arranged close to the nozzles 23 so as to electrostatically charge the spray pesticide mixture fed through the mouth 10.

The mouths 10 of each group 8, 9 are moved by the relative cylinder 20 and by the relative rod 18 around the relative axis 17 between a first operating position, in which the mouths 10 are oriented according to an angle other than 0°, in particular a 90° angle, relative to the direction 15, and a second operating position, in which the mouths 10 are oriented parallel to the direction 15.

With regard the information above, it should be pointed out that, when the mouths 10 of the two groups 8, 9 are arranged in their first operating positions, the outlet direction of the spray pesticide mixture flowing out of the mouths 10 of the group 8 is substantially parallel and opposite to the outlet direction of the spray pesticide mixture flowing out of the mouths 10 of the group 9.

When the apparatus 1 moves forward between two adjacent rows 26 in the direction 15, the mouths 10 of the two groups 8, 9 are moved to their first operating positions, so as to simultaneously carry out the pesticide treatment of the two rows 26.

When the apparatus 1 moves forward along an end row 26 of the crop, i.e. a row 26 that is adjacent to a soil 27 commonly referred to as "buffer zone", which cannot be subjected to the pesticide treatment, the feeding of the liquid pesticide mixture from the tank 22 to the mouths 10 of one of the two groups 8, 9 is interrupted and the mouths 10 of this group 8, 9 are moved to their second operating position.

In this way, while the mouths 10 of one of the groups 8, 9 carry out the pesticide treatment of the end row 26 of the crop, the mouths 10 of the other group 8, 9 feed - into the external environment - a flow of air under pressure defining an air barrier 28 that is substantially parallel to the direction 15.

The barrier 28 is suited to protect the soil 27 from possible contaminations deriving from the spray pesticide mixture fed onto the rows 26 of the crop and transported to the soil 27 by the currents of air present in the atmosphere.

Obviously, according to a variant that is not shown herein, the distribution manifold 7 can be eliminated and replaced with a distribution manifold for each one of the two groups 8, 9 of dispensing mouths 10.

According to a further variant that is not shown herein, the impeller 5 has, in addition to the upper vertical outlet connected to the manifold 7, a lower horizontal outlet, which is connected to two additional dispensing mouths.

Each additional dispensing mouth is mobile around a rotation axis, which is substantially parallel to the direction 11, between a first operating position, in which the additional dispensing mouth is oriented according to an angle other than 0°, in particular a 90° angle, relative to the direction 15, and a second operating position, in which the additional dispensing mouth is oriented parallel to the direction 15.

Since the upper vertical outlet and the lower horizontal outlet can be selectively opened and closed by operating respective mobile closing members, the apparatus 1 can selectively carry out the pesticide treatment either with the dispensing mouths 10 pneumatically fed through the upper vertical outlet (in case of orchards and vineyards) or with the additional dispensing mouths pneumatically fed through the lower horizontal outlet (in case agricultural crops with a relatively small height, such as, for example, kiwis).

When the apparatus 1 carries out the pesticide treatment of an end row 26 with the additional dispensing mouths:
the mouths 10 of at least one group 8, 9 of mouths 10 are moved to their second operating position to generate the barrier 28;
the feeding of the liquid pesticide mixture from the tank 22 to the mouths 10 of the two groups 8, 9 is stopped;
the additional dispensing mouth arranged opposite the end row 26 is moved to its second operating position;
the feeding of the liquid pesticide mixture from the tank 22 to the aforesaid additional dispensing mouth is stopped;
the additional dispensing mouth adjoining the end row 26 is moved to its first operating position;
the feeding of the liquid pesticide mixture from the tank 22 to the aforesaid additional dispensing mouth is enabled; and
the pneumatic feeding to the two additional dispensing mouths is enabled.

## Claims

1. A method for the pesticide treatment of agricultural crops by means of an apparatus, which is movable in a forward direction (15) and comprises at least a first and second dispensing mouth (10);
the method comprising the steps of:
moving the first dispensing mouth (10) to a first operating position; and
feeding to the first dispensing mouth (10), which is arranged in the first operating position, a flow of air under pressure and a liquid pesticide mixture, so as to treat a row (26) of an agricultural crop with a spray pesticide mixture flowing out of the first dispensing mouth (10) according to an angle other than 0° relative to the forward direction (15);
and being **characterized in that** it comprises, furthermore, the steps of:
moving the second dispensing mouth (10) to a second operating position;
stopping the feeding of the liquid pesticide mixture to the second dispensing mouth (10); and
feeding to the second dispensing mouth (10), which is arranged in the second operating position, a flow of air under pressure flowing out of the second dispensing mouth (10) parallel to the forward direction (15), so as to generate an air barrier (28), which is suited to contain the spray pesticide mixture fed onto the row (26) by the first dispensing mouth (10).

2. A method according to claim 1, wherein the spray pesticide mixture flowing out of the first dispensing mouth (10) is substantially transverse to the forward direction (15), when the first dispensing mouth (10) is arranged in the first operating position.

3. A method according to claim 1 or 2, wherein the spray pesticide mixture is fed onto the row (26) by a group (8) of first dispensing mouths (10), which are arranged one over the other in an aligning direction (11) that is substantially vertical and transverse to the forward direction (15).

4. A method according to any of the previous claims, wherein the air barrier (28) is generated by a group (9) of second dispensing mouths (10), which are arranged one over the other in an aligning direction (11) that is substantially vertical and transverse to the forward direction (15).

5. An apparatus according to any of the previous claims, wherein each one of said first and second dispensing mouths (10) comprises a flexible duct (12), which is mobile between said first and second operating positions.

6. A method according to claim 5, wherein each flexible duct (12) is fixed to a crank (16), which is mounted so as to rotate around a rotation axis (17) that is substantially parallel to the aligning direction (11).

7. A method according to claim 6, when it depends on claims 3 and 4, wherein the cranks (16) of the first dispensing mouths (10) are connected to one another by a first coupling rod (18) and the cranks (16) of the second dispensing mouths (10) are connected to one another by a second coupling rod (18); the method comprising the step of:
moving each coupling rod (18) and the relative dispensing mouths (10) between said first and second operating positions.

8. A method according to any of the previous claims and comprising, furthermore, the step of:
feeding the liquid pesticide mixture to at least one dispensing nozzle (23), which is mounted at the outlet of each one of said first and second dispensing mouths (10).

9. A method according to any of the previous claims and comprising, furthermore, the step of:
electrically charging the spray pesticide mixture flowing out of each one of said first and second dispensing mouths (10).

## Patentansprüche

1. Verfahren zur Pestizidbehandlung landwirtschaftlicher Nutzpflanzen mit Hilfe einer Vorrichtung, die in Vorwärtsrichtung (15) beweglich ist und mindestens eine erste und zweite Abgabeöffnung (10) aufweist;
wobei das Verfahren die Schritte aufweist:
Bewegen der ersten Abgabeöffnung (10) in eine erste Betriebsposition; und
zur ersten Abgabeöffnung (10), die in der ersten Betriebsposition angeordnet ist, erfolgendes Zuführen einer Luftströmung unter Druck und einer flüssigen Pestizidmischung, um eine Reihe (26) einer landwirtschaftlichen Nutzpflanze mit einer aus der ersten Abgabeöffnung (10) strömenden Spritzpestizidmischung gemäß einem Winkel ungleich 0° relativ zur Vorwärtsrichtung (15) zu behandeln;
und **dadurch gekennzeichnet, dass** es ferner die Schritte aufweist:
Bewegen der zweiten Abgabeöffnung (10) in eine zweite Betriebsposition; Stoppen des Zuführens der flüssigen Pestizidmischung zur zweiten Abgabeöffnung (10); und
zur zweiten Abgabeöffnung (10), die in der zweiten Betriebsposition angeordnet ist, erfolgendes Zuführen einer Luftströmung unter Druck, die aus der zweiten Abgabeöffnung (10) parallel zur Vorwärtsrichtung (15) strömt, um eine Luftsperre (28) zu erzeugen, die geeignet ist, die Spritzpestizidmischung zu enthalten, die durch die erste Abgabeöffnung (10) der Reihe (26) zugeführt wird.

2. Verfahren nach Anspruch 1, wobei die aus der ersten Abgabeöffnung (10) strömende Spritzpestizidmischung im Wesentlichen quer zur Vorwärtsrichtung (15) ist, wenn die erste Abgabeöffnung (10) in der ersten Betriebsposition angeordnet ist.

3. Verfahren nach Anspruch 1 oder 2, wobei die Spritzpestizidmischung der Reihe (26) durch eine Gruppe (8) erster Abgabeöffnungen (10) zugeführt wird, die übereinander in einer Ausrichtrichtung (11) angeordnet sind, die im Wesentlichen vertikal und quer zur Vorwärtsrichtung (15) ist.

4. Verfahren nach einem der vorstehenden Ansprüche, wobei die Luftsperre (28) durch eine Gruppe (9) zweiter Abgabeöffnungen (10) erzeugt wird, die übereinander in einer Ausrichtrichtung (11) angeordnet sind, die im Wesentlichen vertikal und quer zur Vorwärtsrichtung (15) ist.

5. Vorrichtung nach einem der vorstehenden Ansprüche, wobei jede der ersten und zweiten Abgabeöffnungen (10) eine flexible Leitung (12) aufweist, die zwischen der ersten und zweiten Betriebsposition beweglich ist.

6. Verfahren nach Anspruch 5, wobei jede flexible Leitung (12) an einer Kurbel (16) befestigt ist, die so angebaut ist, dass sie um eine Drehachse (17) dreht, die im Wesentlichen parallel zur Ausrichtrichtung (11) ist.

7. Verfahren nach Anspruch 6 in Abhängigkeit von Anspruch 3 und 4, wobei die Kurbeln (16) der ersten Abgabeöffnungen (10) durch eine erste Koppelstange (18) miteinander verbunden sind und die Kurbeln (16) der zweiten Abgabeöffnungen (10) durch eine zweite Koppelstange (18) miteinander verbunden sind; wobei das Verfahren den Schritt aufweist:
Bewegen jeder Koppelstange (18) und der relativen Abgabeöffnungen (10) zwischen der ersten und zweiten Betriebsposition.

8. Verfahren nach einem der vorstehenden Ansprüche, das ferner den Schritt aufweist:
Zuführen der flüssigen Pestizidmischung zu mindestens einer Abgabedüse (23), die am Auslass jeder der ersten und zweiten Abgabeöffnungen (10) angebaut ist.

9. Verfahren nach einem der vorstehenden Ansprüche, das ferner den Schritt aufweist:
elektrisches Laden der Spritzpestizidmischung, die aus jeder der ersten und zweiten Abgabeöffnungen (10) strömt.

## Revendications

1. Procédé pour le traitement insecticide de cultures agricoles au moyen d'un appareil, qui est apte à se déplacer dans une direction avant (15) et comprend au moins un premier et un deuxième embout distributeur (10) ;
le procédé comprenant les étapes consistant à déplacer le premier embout distributeur (10) jusqu'à une première position opérante ; et
distribuer jusqu'au premier embout distributeur (10), qui est agencé dans la première position opérante, un flux d'air sous pression et un mélange insecticide liquide, afin de traiter une rangée (26) d'une culture agricole au moyen d'un mélange insecticide en spray s'écoulant du premier embout distributeur (10) suivant un angle autre que 0° relativement à la direction avant (15) ;
et étant **caractérisé en ce qu'**il comprend, en outre, les étapes consistant à :
déplacer le deuxième embout distributeur (10) jusqu'à une deuxième position opérante ;
arrêter la distribution du mélange insecticide liquide jusqu'au deuxième embout distributeur (10) ; et
distribuer jusqu'au deuxième embout distributeur (10), qui est agencé dans la deuxième position opérante, un flux d'air sous pression s'écoulant du deuxième embout distributeur (10) parallèlement à la direction avant (15), afin de produire une barrière d'air (28), qui est conçue pour contenir le mélange insecticide en spray distribué sur la rangée (26) par le premier embout distributeur (10).

2. Procédé selon la revendication 1, dans lequel le mélange insecticide en spray s'écoulant du premier embout distributeur (10) est sensiblement transversal à la direction avant (15), lorsque le premier embout distributeur (10) est agencé dans la première position opérante.

3. Procédé selon la revendication 1 ou 2, dans lequel le mélange insecticide en spray est distribué sur la rangée (26) par un groupe (8) de premiers embouts distributeurs (10), qui sont agencés l'un au-dessus de l'autre dans une direction d'alignement (11) qui est sensiblement verticale et transversale à la direction avant (15).

4. Procédé selon l'une quelconque des revendications précédentes, dans lequel la barrière d'air (28) est produite par un groupe (9) de deuxièmes embouts distributeurs (10), qui sont agencés l'un au-dessus de l'autre dans une direction d'alignement (11) qui est sensiblement verticale et transversale à la direction avant (15).

5. Procédé selon l'une quelconque des revendications précédentes, dans lequel chacun desdits premiers et deuxièmes embouts distributeurs (10) comprend un conduit souple (12), qui est mobile entre lesdites première et deuxième positions opérantes.

6. Procédé selon la revendication 5, dans lequel chaque conduit souple (12) est fixé à une manivelle (16), qui est montée afin de tourner autour d'un axe de rotation (17) qui est sensiblement parallèle à la direction d'alignement (11).

7. Procédé selon la revendication 6, lorsque dépendante des revendications 3 et 4, dans lequel les manivelles (16) des premiers embouts distributeurs (10) sont reliées les unes aux autres par une première bielle d'accouplement (18) et les manivelles (16) des deuxièmes embouts distributeurs (10) sont reliées les unes aux autres par une deuxième bielle d'accouplement (18) ; le procédé comprenant l'étape de :
déplacement de chaque bielle d'accouplement (18) et des embouts de distribution relatifs (10) entre lesdites première et deuxième positions opérantes.

8. Procédé selon l'une quelconque des revendications précédentes et comprenant, en outre, l'étape :
d'alimentation du mélange insecticide liquide jusqu'à au moins une buse de distribution (23), qui est montée à la sortie de chacun desdits premiers et deuxièmes embouts distributeurs (10).

9. Procédé selon l'une quelconque des revendications précédentes et comprenant, en outre, l'étape consistant à :
charger électriquement le mélange insecticide en spray s'écoulant de chacun desdits premiers et deuxièmes embouts distributeurs (10).
